# FASCICULE DE BREVET EUROPEEN

(11) **EP 3 183 165 B1**
(45) Date de publication et mention de la délivrance du brevet: **13.06.2018**
(21) Numéro de dépôt: 15754269.7
(22) Date de dépôt: 17.07.2015
(51) Int. Cl.: B62K 3/00, B62K 15/00

(54) **VEHICULE A ROULETTES DE TYPE TROTTINETTE**
ROLLERSARTIGES FAHRZEUG MIT RÄDERN
SCOOTER TYPE WHEELED VEHICLE

(30) Priorité: 22.08.2014 FR 1457929
(43) Date de publication de la demande: 28.06.2017
(73) Titulaire: PSA Automobiles SA, 78300 Poissy (FR)
(72) Inventeur: LOUGHNANE, Cathal, F-78000 Versailles (FR); VENET, Celine, F-91190 Villiers le Bacle (FR)
(74) Mandataire: Timoney, Ian Charles Craig
(86) Numéro de dépôt international: PCT/FR2015/051982
(87) Numéro de publication internationale: WO 2016/027018

(56) Documents cités:
- WO-A2-2010/050803
- DE-A1- 10 031 853
- DE-A1- 10 045 821
- DE-C1- 4 308 296

## Description

La présente invention revendique la priorité de la demande française 1457929 déposée le 22 août 2014. La présente invention se rapporte au domaine des véhicules à roulettes de type trottinette, c'est-à-dire des véhicules permettant de supporter le poids d'une personne au moyen d'une plateforme suffisamment large pour permettre à un utilisateur d'y positionner au moins un pied. L'autre pied est utilisé pour propulser le véhicule en prenant appui sur le sol. De tels véhicules à roulettes comportent également des moyens de pilotage, tels un guidon ou une poignée pour permettre notamment à l'utilisateur de guider et de stabiliser le véhicule.

De façon générale, de tels véhicules à roulettes présentent une roulette avant située au niveau d'une extrémité inférieure de la colonne de direction ainsi qu'une roulette arrière agencée au niveau d'une extrémité arrière de la plateforme destinée à supporter le poids de l'utilisateur.

L'invention vise plus particulièrement un véhicule à roulettes qui est muni d'une colonne de direction qui peut pivoter par rapport à la plateforme qui supporte le poids de l'utilisateur. Une telle colonne de direction permet, quant à elle, de guider en rotation au moins une roulette, qui, le plus couramment, est la roulette avant. Le fait que la colonne de direction soit agencée pour pivoter par rapport à la plateforme permet de rendre le véhicule plus compact lorsqu'il est stocké ou transporté dans un autre véhicule. En effet, l'encombrement du véhicule est considérablement réduit en positionnant la colonne de direction sensiblement parallèlement par rapport à la plateforme.

Le document FR 2 975 662 décrit un véhicule à roulettes de type trottinette dans lequel la colonne de direction est agencée pour pivoter par rapport à la plateforme qui supporte le poids de l'utilisateur. La colonne de direction est assujettie en liaison pivot par rapport à la plateforme selon un axe de rotation perpendiculaire à une direction privilégiée d'avancement du véhicule.

De plus, l'axe de rotation de la colonne de direction par rapport à la plateforme est agencé dans une zone située à l'avant de la colonne de direction, selon la direction privilégiée d'avancement du véhicule, par opposition à une zone située à l'arrière de la colonne de direction où une roulette arrière coopère avec la plateforme. Le document WO2010/050803 décrit une trottinette dans laquelle la colonne de direction est montée à pivotement sur la fourche. Les agencements décrits dans ces documents permettent de rabattre la colonne de direction vers une position dans laquelle elle s'étend sensiblement parallèle à la plateforme du véhicule. Cependant, dans cette position rabattue, la colonne de direction se trouve éloignée de la plateforme de sorte que l'encombrement du véhicule reste important, même lorsque la colonne de direction est en position rabattue.

L'invention a pour but de remédier aux inconvénients de l'art antérieur en proposant un véhicule à roulettes de type trottinette qui permet de garantir un encombrement minimal du véhicule une fois replié et agencé en position fermée.

Dans ce but, la présente invention propose un véhicule à roulettes de type trottinette comportant une plateforme à l'arrière de laquelle est montée une roue arrière, une colonne de direction dont l'extrémité supérieure longitudinale est reliée à un guidon et l'extrémité inférieure à une fourche portant une roue avant, la plateforme et la colonne de direction étant reliées par un organe de liaison, caractérisé en ce que l'organe de liaison comporte une potence sur laquelle est fixée, par un axe de rotation, le nez de la fourche, la colonne de direction étant montée à pivotement sur la fourche afin de pouvoir être repliée vers la plateforme. L'extrémité inférieure du guidon est constituée par un ensemble de deux bras encadrant l'organe de liaison et la potence lorsque la colonne de direction est en position repliée. Les dits bras forment avec l'extrémité supérieure longitudinale de la colonne direction un angle identique à celui formé entre l'organe de liaison et la plateforme, de sorte que la colonne de direction vient se positionner, en position repliée, à proximité immédiate de la plateforme, parallèlement à celle-ci. Selon une caractéristique particulière, le véhicule comporte de plus un mécanisme de verrouillage de de la colonne de direction en position de conduite.

Avantageusement, le guidon du véhicule est constitué par un cintre à deux dents, portant des poignées.

Selon une caractéristique particulière, l'espace entre les deux dents forme un passage pour la roue arrière lorsque la colonne de direction est en position repliée.

L'invention sera mieux comprise et d'autres aspects et avantages apparaîtront plus clairement à la lecture de la description qui suit d'un mode particulier de réalisation, donné à titre d'exemple nullement limitatif et en référence aux dessins qui l'accompagnent, dans lesquels :
la figure 1 est une vue en perspective d'un véhicule à roulettes de type trottinette selon l'invention, dans sa position dépliée ;
la figure 2 est une vue en perspective du véhicule de la figure 1 dans sa position rabattue ;
la figure 3 est une vue éclatée du véhicule de la figure 1 ; et
les figures 4a, 4b et 4c sont chacune une vue schématique d'un mécanisme de verrouillage destiné à équiper le véhicule de la figure 1.

Comme déjà évoqué, l'invention concerne un véhicule à roulettes de type trottinette.

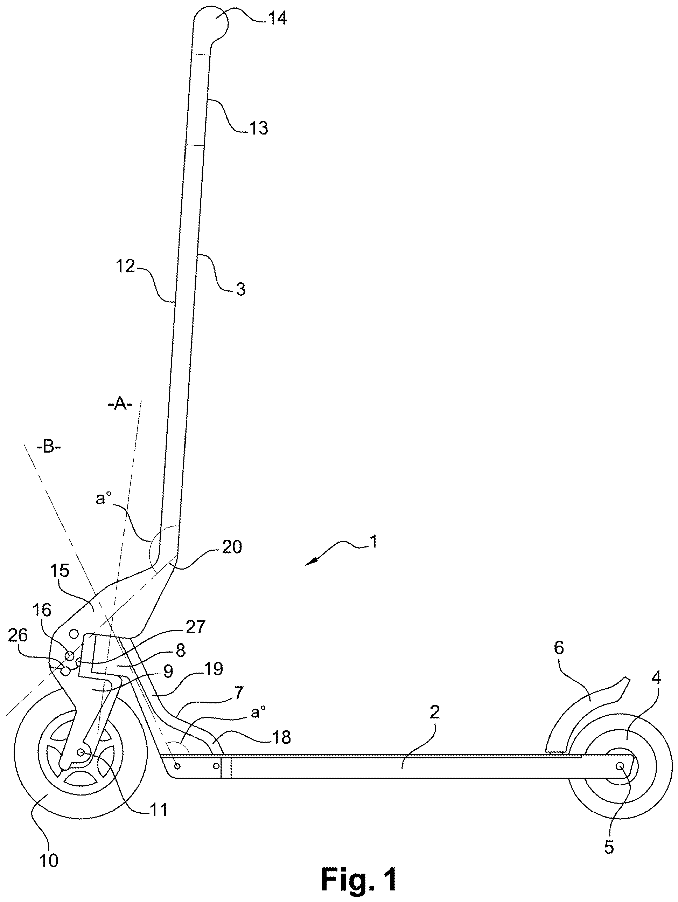

Tel que représenté à la figure 1, un véhicule à roulettes 1 comporte une plateforme 2 sur laquelle un utilisateur peut se positionner afin de se déplacer. Une telle plateforme 2 est articulée par rapport à une colonne de direction 3 de façon à permettre une réduction du volume d'encombrement du véhicule à roulettes 1 lors de son stockage ou de son transport.

La plateforme 2 est munie, à une extrémité, d'une roulette arrière 4 qui est montée en rotation autour d'un axe 5 au moyen d'un roulement (non-représenté). De façon connue en soi, un frein 6, destiné à être actionné par le pied d'un utilisateur, est monté à pivotement sur l'arrière de la plateforme à proximité de la roulette arrière 4. Lorsque l'utilisateur appui sur le frein avec son pied, le frein bascule pour venir en appui contre le pourtour de la roulette, réduisant ainsi la vitesse de rotation de la roulette arrière 4. A son autre extrémité, la plateforme 2 comporte un organe de liaison 7 muni, à son extrémité éloignée de la plateforme, d'une potence 8. La potence 8 comporte un alésage qui est destiné à recevoir l'axe (non-représenté) d'un porte-roulette 9 afin que cette dernière puisse tourner autour d'un axe - A - qui s'étend dans un plan sensiblement vertical, mais légèrement incliné par rapport à une direction verticale. Le porte-roulette 9, qui est en forme de fourche, est équipée d'une roulette avant 10 qui est montée en rotation autour d'un axe 11 au moyen d'un roulement (non-représenté).

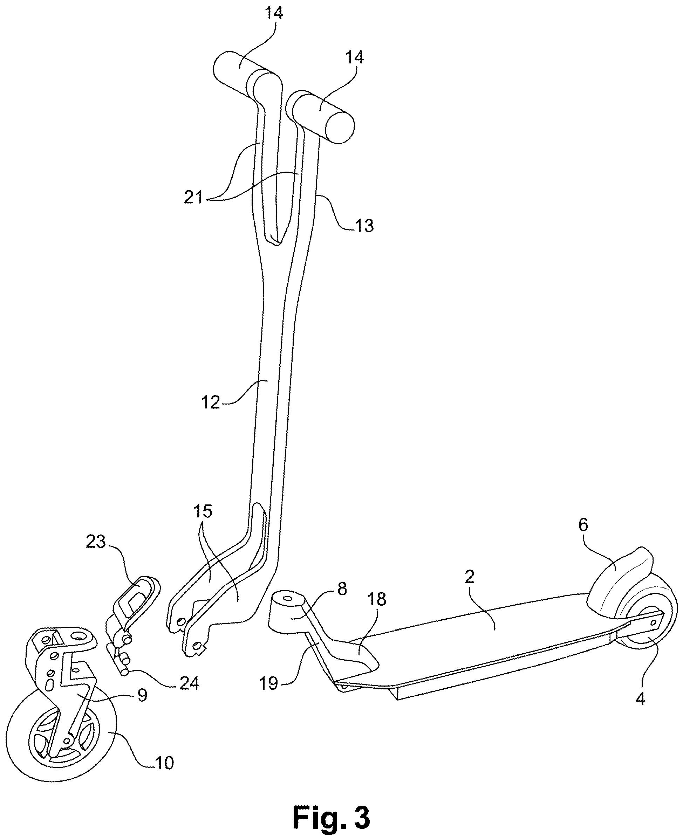

La colonne de direction 3 comporte une partie centrale 12 et, à une extrémité de celle-ci - l'extrémité supérieure lorsque le véhicule est en cours d'utilisation -, des moyens de guidage en forme d'une cintre 13 qui, dans l'exemple illustré, comprend deux poignées 14 (voir la figure 3). A son autre extrémité, extrémité inférieure, la partie centrale 12 comprend au moins un bras 15, deux dans l'exemple illustré et qui s'étendent de manière sensiblement parallèle. Les extrémités des bras 15 de la colonne de direction 3 sont montées sur le porte-roulette 9 au moyen d'un axe 16 qui s'étend de part et d'autre des bras à travers un alésage 17 formé dans le porte-roulette 9. Ainsi, une rotation appliquée à la colonne de direction 3 par un utilisateur autour de l'axe - A - au moyen des deux poignées 14, est transmise au porte-roulette 9 et la roulette avant 10.

L'organe de liaison 7 comprend une embase 18 par lequel il est monté fixe sur la plateforme 2 et une partie sensiblement longitudinale 19 qui s'étend entre l'embase et la potence 8. L'axe - B - de la partie sensiblement longitudinale 19 se trouve à un angle a° par rapport au plan de la plateforme 2. Dans un exemple préféré, cet angle est de 115° ; mais d'autres angles peuvent être envisagés.

La colonne de direction 3 est agencée pour être basculée sélectivement, par un utilisateur, autour de l'axe 16, tel qu'il sera décrit ci-après. Les deux bras 15 s'étendent à partir de l'extrémité inférieure 20 de la partie centrale 12 de la colonne de direction 3 de manière à ce que la ligne qui relie l'extrémité 20 à l'axe 16 forme un angle par rapport à l'axe de la partie centrale 12.

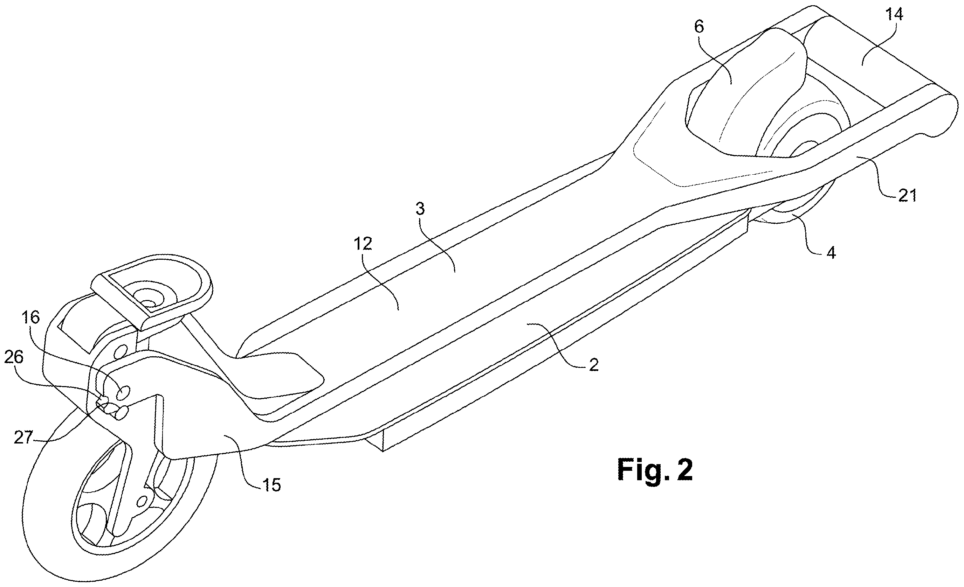

L'angle a° entre l'axe - B - de la partie sensiblement longitudinale 19 du organe de liaison 7 et le plan de la plateforme 2 est sensiblement similaire à celui entre la ligne qui relie l'extrémité 20 à l'axe 16, et l'axe de la partie centrale 12 de la colonne de direction 3. De plus, la longueur du organe de liaison 7 est sensiblement similaire à celle des bras 15 qui relient l'extrémité inférieure de la partie centrale 12 de la colonne de direction 3 à l'axe 16. Ces dimensions ont pour effet que, lorsque l'utilisateur bascule la colonne de direction 3 de sa position illustrée à la Figure 1 dans laquelle elle se trouve à un angle d'environ 90° par rapport à la plateforme 2, vers sa position rabattue illustrée à la Figure 2, la colonne de direction pivote autour de l'axe 16. Les bras 15 sont dimensionnés pour passer autour de l'embase 18 du organe de liaison 7 lorsque la colonne de direction est rabattue. De plus, les moyens de guidage 13 comportent deux bras 21 qui sont dimensionnés pour passer autour de la roulette arrière 4 et le frein 6.

Grace à ce dimensionnement, la colonne de direction 3 se trouve, une fois rabattue sur la plateforme 2, dans une position dans laquelle elle s'étend sensiblement parallèle à la plateforme en en proximité à cette dernière. Ainsi, l'invention permet de garantir un encombrement minimal lors du stockage ou du transport du véhicule en position fermée.

Les poignées 14 du guidon peuvent être retournées par un utilisateur afin de se retrouver dans la position représentée à la figure 2. Dans cette position, les deux poignées se recouvrent et forment une poignée unique par laquelle un utilisateur peut déplacer le véhicule en le faisant rouler sur la roulette avant 10 comme un bagage type valise à roulettes.

Afin d'empêcher la colonne de direction 3 de pouvoir basculer librement de sa position relevée à sa position rabattue, ce qui gênerait l'utilisation du véhicule, on dispose, sur le devant du porte-roulette 9 par rapport à une direction privilégiée d'avancement du véhicule, d'un mécanisme de verrouillage de la colonne de direction 3 lorsqu'elle se trouve dans l'une ou l'autre de ses positions.

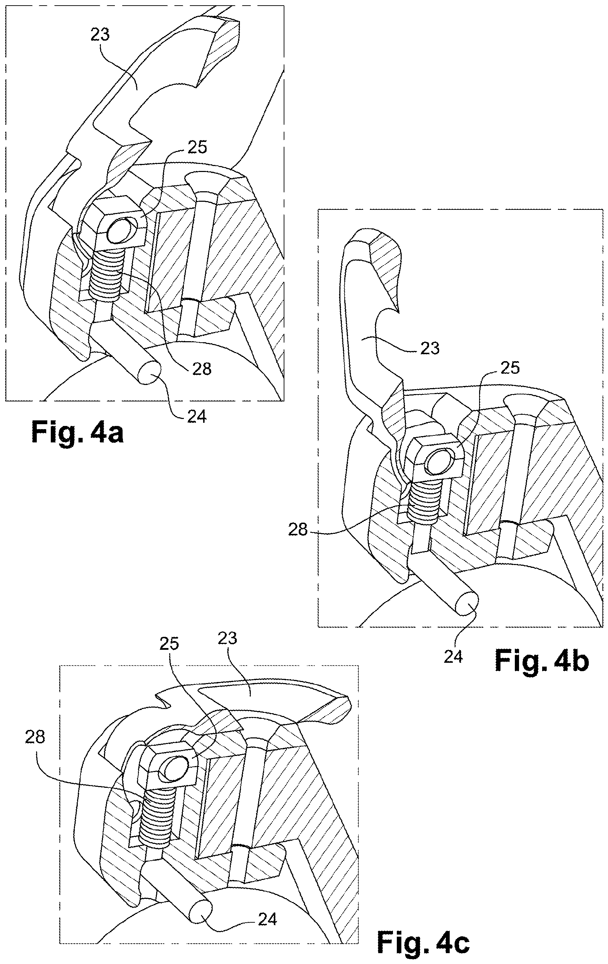

Comme illustré sur les figures 4a à 4c, le mécanisme de verrouillage comporte une poignée 23 montée en liaison pivot par rapport au porte-roulette 9 selon un axe de rotation perpendiculaire à une direction privilégiée d'avancement du véhicule, une tige de verrouillage 24 pouvant être déplacée en translation parallèlement à l'axe - A - , un système de came radiale 25 permettant à la rotation de la poignée 23 d'entraîner en translation la tige de verrouillage 24 et un ressort 28 assurant la fluidité du déplacement en translation de ladite tige.

La poignée 23 peut prendre une première position inclinée (dite initiale) dans laquelle le mécanisme de verrouillage bloque la colonne de direction 3 en position relevée, une seconde position sensiblement verticale (dite ouverte) dans laquelle il permet à la colonne de direction 3 de basculer autour de l'axe 16, ou une troisième position sensiblement horizontale (dite fermée) dans laquelle il bloque la colonne de direction 3 en position rabattue.

Comme illustré sur la figure 4a, lorsque la poignée 23 est en position initiale, elle se trouve contre les bras 15 de la colonne de direction 3 lorsque celle-ci se trouve en position relevée, et la tige de verrouillage 24 se trouve dans une première cavité 26 (représentée sur la figure 2), de forme complémentaire à la tige verrouillage 24, et présente sur les bras 15 de la colonne de direction 3, empêchant la rotation de ladite colonne autour de l'axe 16.

Comme illustré sur la figure 4b, en basculant la poignée 23 vers sa position ouverte, le système de came radiale 25 entraîne en translation vers la bas la tige de verrouillage 24. Lorsque la poignée 23 est en position ouverte, les bras 15 de la colonne de direction 3 ne sont plus en contact avec la tige de verrouillage 24, ce qui permet à la colonne de basculer librement vers sa position rabattue.

Comme illustré sur la figure 4c, afin de bloquer la colonne de direction 3 en position rabattue, la poignée 23 est basculée vers sa position fermée, se retrouvant contre les bras 15 de la colonne de direction 3, et le système de came radiale 25 entraîne en translation vers le haut la tige de verrouillage 24 qui vient se loger dans une seconde cavité 27 (représentée sur la figure 2), de forme complémentaire à la tige de verrouillage 24, et présente sur les bras 15 de la colonne de direction 3.

Il ressort de ce qui précède qu'un véhicule à roulettes conforme à l'invention présente de nombreux avantages, et notamment :
- il permet de garantir un encombrement minimal lors du stockage ou du transport du véhicule en position fermée;
- il permet de maintenir la colonne de direction dans une position ouverte par rapport à la plateforme lorsque l'utilisateur est positionné à sa surface ;
- il permet de passer très rapidement d'un ensemble destiné à une utilisation type trottinette à un ensemble destiné à être utilisé comme un bagage type valise à roulettes ; et
- il permet de maintenir la colonne de direction dans une position fermée par rapport à la plateforme lorsque le véhicule est en position fermée.

## Revendications

1. Véhicule à roulettes (1) de type trottinette comportant une plateforme (2) à l'arrière de laquelle est montée une roue arrière (4), une colonne de direction (3) dont l'extrémité supérieure longitudinale (12) est reliée à un guidon (13) et l'extrémité inférieure (15) à une fourche (9) ayant un nez et portant une roue avant (10), la plateforme (2) et la colonne de direction (3) étant reliées par un organe de liaison (7), l'organe de liaison comportant une potence (8) sur laquelle est fixée, par un axe de rotation, le nez de la fourche (9), la colonne de direction étant montée à pivotement sur la fourche afin de pouvoir être repliée vers la plateforme (2), l'extrémité inférieure du guidon (13) étant constituée par un ensemble de deux bras (15), **caractérisée en ce que** les dits bras (15) encadrent l'organe de liaison (7) et la potence (8) lorsque la colonne de direction est en position repliée et **en ce qu'**ils forment avec l'extrémité supérieure longitudinale (12) de la colonne de direction (13) un angle identique à celui formé entre l'organe de liaison (7) et la plateforme (2), de sorte que la colonne de direction (3) vient se positionner, en position repliée, à proximité immédiate de la plateforme (2), parallèlement à celle-ci.

2. Trottinette selon la revendication 1 **caractérisée en ce qu'**elle comporte de plus un mécanisme de verrouillage de de la colonne de direction en position de conduite.

3. Trottinette selon la revendication 2 **caractérisée en ce que** le guidon (13) est constitué par un cintre (13) à deux dents portant des poignées (14).

4. Trottinette selon la revendication 3, **caractérisée en ce que** l'espace entre les deux dents forme un passage pour la roue arrière (4) lorsque la colonne de direction (3) est en position repliée.

5. Trottinette selon la revendication 3 ou 4, **caractérisée en ce que** les poignées (14) sont repliables l'une vers l'autre.

## Patentansprüche

1. Fahrzeug mit Rollen (1) vom Typ Scooter, umfassend eine Plattform (2), an der hinten ein Hinterrad (4) montiert ist, eine Lenkstange (3), deren oberes Längsende (12) mit einem Lenker (13) verbunden ist, und deren unteres Ende (15) mit einer Gabel (9) eine Nase hat und ein Vorderrad (10) trägt, wobei die Plattform (2) und die Lenkstange (3) durch ein Verbindungselement (7) verbunden sind, wobei das Verbindungselement einen Ausleger (8) umfasst, auf dem durch eine Drehachse die Nase der Gabel (9) befestigt ist, wobei die Lenkstange schwenkbar auf der Gabel montiert ist, um zu der Plattform (2) umgeklappt werden zu können, wobei das untere Ende des Lenkers (13) von einer Einheit von zwei Armen (15) gebildet ist, **dadurch gekennzeichnet, dass** die Arme (15) das Verbindungselement (7) und den Ausleger (8) umgeben, wenn die Lenkstange in der umgeklappten Position ist, und dass sie mit dem oberen Längsende (12) der Lenkstange (13) einen identischen Winkel mit dem zwischen dem Verbindungselement (7) und der Plattform (2) gebildeten bilden, so dass sich die Lenkstange (3) in der umgeklappten Position in unmittelbarer Nähe der Plattform (2) parallel zu dieser positioniert.

2. Scooter nach Anspruch 1, **dadurch gekennzeichnet, dass** er ferner einen Mechanismus zur Verriegelung der Lenkstange in Fahrposition umfasst.

3. Scooter nach Anspruch 2, **dadurch gekennzeichnet, dass** der Lenker (13) von einem Bügel (13) mit zwei Zähnen, die Griffe (14) tragen, gebildet ist.

4. Scooter nach Anspruch 3, **dadurch gekennzeichnet, dass** der Raum zwischen den zwei Zähnen einen Durchgang für das Hinterrad (4) bildet, wenn die Lenkstange (3) in der umgeklappten Position ist.

5. Scooter nach Anspruch 3 oder 4, **dadurch gekennzeichnet, dass** die Griffe (14) zueinander umklappbar sind.

## Claims

1. A scooter-type wheeled vehicle (1) comprising a platform (2) at the rear of which a rear wheel (4) is mounted, a steering column (3), the upper longitudinal end (12) of which is connected to a handlebar (13) and the lower end (15) of which is connected to a fork (9) having a nose and carrying a front wheel (10), the platform (2) and the steering column (3) being connected by a connecting member (7), the connecting member comprising a bracket (8) on which the nose of the fork (9) is attached by means of a rotational axis, the steering column being pivotably mounted on the fork so as to be able to be folded towards the platform (2), the lower end of the handlebar (13) being constituted by an assembly of two arms (15), **characterized in that** said arms (15) frame the connecting member (7) and the bracket (8) when the steering column is in folded position, and **in that** they form with the upper longitudinal end (12) of the steering column (13) an identical angle to that formed between the connecting member (7) and the platform (2), such that the steering column (3) comes to position itself, in folded position, in the immediate proximity of the platform (2), parallel to the latter.

2. The scooter according to claim 1, **characterized in that** it comprises in addition a mechanism for locking the steering column in driving position.

3. The scooter according to claim 2, **characterized in that** the handlebar (13) is constituted by an arc (13) with two teeth carrying handgrips (14).

4. The scooter according to claim 3, **characterized in that** the space between the two teeth forms a passage for the rear wheel (4) when the steering column (3) is in folded position.

5. The scooter according to claim 3 or 4, **characterized in that** the handgrips (14) are able to be folded towards one another.
